# EUROPEAN PATENT SPECIFICATION

(11) **EP 2 105 646 B1**
(45) Date of publication and mention of the grant of the patent: **26.10.2011**
(21) Application number: 08425201.4
(22) Date of filing: 27.03.2008
(51) Int. Cl.: F16L 37/088

(54) **Joining device for components in fluid conveyance and distribution systems**
Verbindungsvorrichtung für Komponenten in Flüssigkeitsförderungs- und Vertriebssystemen
Dispositif d'assemblage pour le transport de composants liquides et systèmes de distribution

(43) Date of publication of application: 30.09.2009
(73) Proprietor: F.I.P. Formatura Iniezione Polimeri S.p.A, 16015 Casella (Genova) (IT)
(72) Inventor: Mazzacano, Corrado c/o F.I.P. Formatura Iniezione Polimeri S.P.A, 16015 Casella, Genova (IT); Bisio, Andrea c/o F.I.P. Formatura Iniezione Polimeri S.p.A, 16015 Casella, Genova (IT)
(74) Representative: Crippa, Paolo Ernesto

(56) References cited:
- EP-A- 1 336 790
- US-A- 4 007 953
- US-A1- 2002 135 181
- US-A1- 2004 124 635

## Description

The present invention relates to a joining device for components in fluid conveyance and distribution systems and, particularly, a joining device for flange connectors for valves and the like. One of the many functions of such joining devices is, for example, to provide a valve or a similar functional assembly with a flanged tubular connector in order to allow the connection thereof with another flanged component.

Flange connectors are known, for example, for valves comprising a tubular portion and a connection flange obtained as one piece with a first end of the tubular portion, in which the connection flange comprises a plurality of holes to accommodate bolts for the connection of a further component of the fluid conveyance and distribution system, for example, a reservoir or a duct with a corresponding connection flange.

A second end (free end) of the tubular portion opposite the first end (flange side) is connected to the valve by means of partial insertion in a tubular length of the latter, and by successive welding or gluing in order to make the connection mechanically resistant and impermeable.

While in this manner a valve is achieved with flanged attachment, the joining device connection by gluing or welding constitutes, on one hand, a mechanically weak point and, on the other hand, it makes an installation fully meeting the measures standardized by the specific technical regulations (for example, ANSI, JIS, DIN) for the individual fluid-technical components difficult. US4007953 and US2002/0135181A1 describe prior art joining devices having the features of the preamble of claim 1.

Therefore, object of the present invention is to devise a joining device for components in fluid conveyance and distribution systems and, particularly, a joining device for flange connectors for valves and the like, which ensures a mechanically resistant connection and, at the same time, preset overall dimensions of the component which it is connected to, as required by the regulations in the subject field.

Within the scope of the main object, a further object of the present invention is to provide a manufacturing method for the joining device, so as to considerably increase the adaptability thereof to different normative standards, and to conciliate a large-scale production with a customization of the product for different markets in which different technical regulations are in force.

These and other objects are achieved by a joining device according to claim 1, and by a method for manufacturing such joining device according to claim 10.

The dependant claims relate to advantageous embodiments.

In order to better understand the invention and appreciate the advantages thereof, some non-limiting, exemplary embodiments thereof are described herein below, with reference to the annexed drawings, in which:

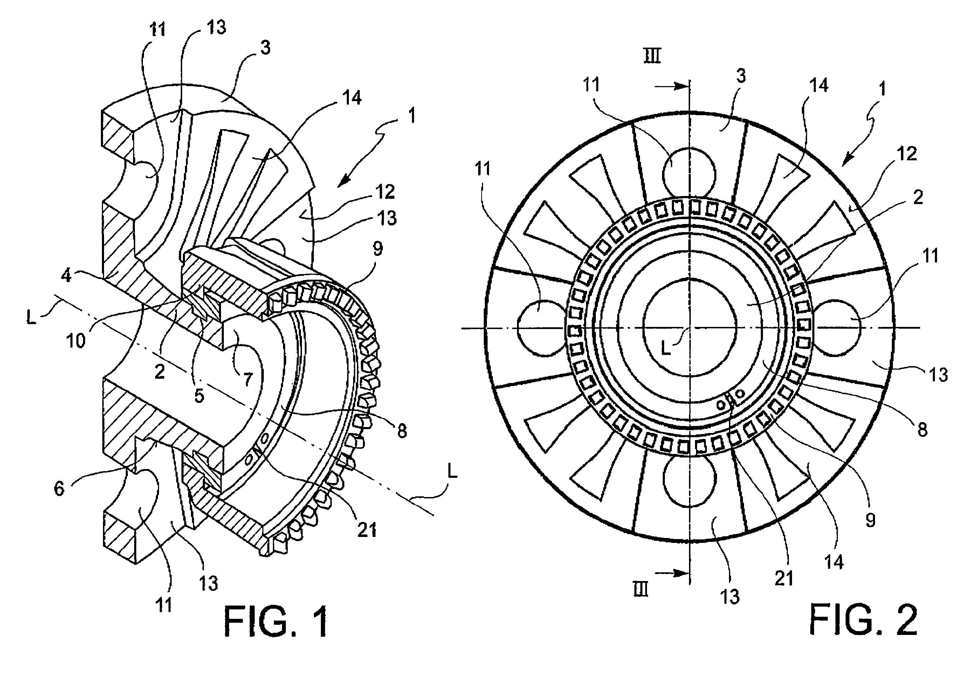

Fig. 1 is a partially cut-away, perspective view of a joining device according to an embodiment of the invention;

Fig. 2 is a front view of the device in Fig. 1;

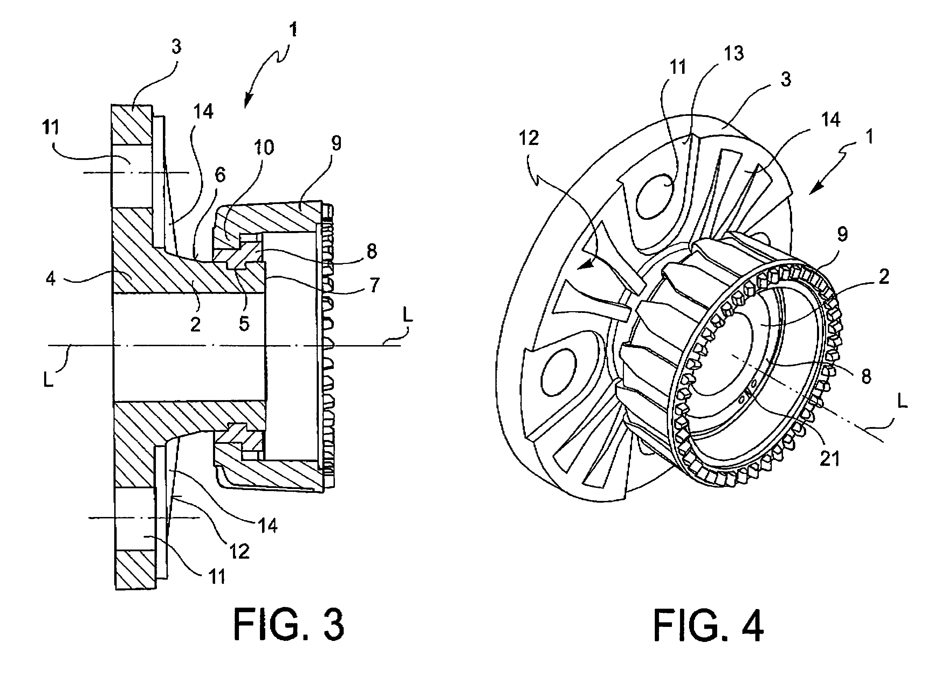

Fig. 3 is a sectional view along the line III-III in Fig. 2;

Fig. 4 is a perspective view of the device in Fig. 1;

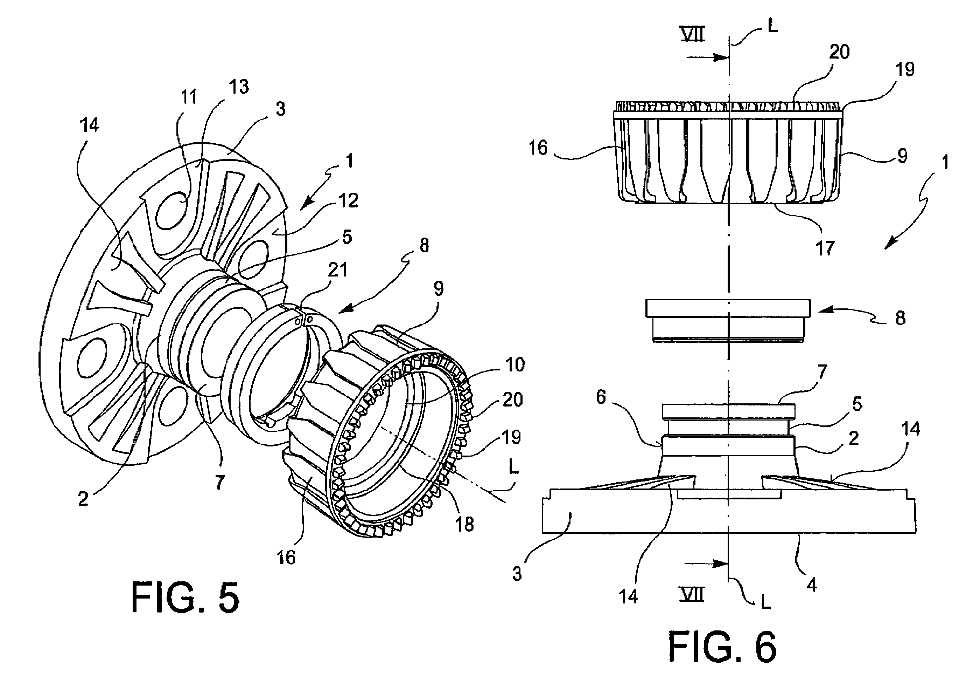

Fig. 5 is an exploded perspective view of the device in Fig. 1;

Fig. 6 is an exploded side view of the device in Fig. 1;

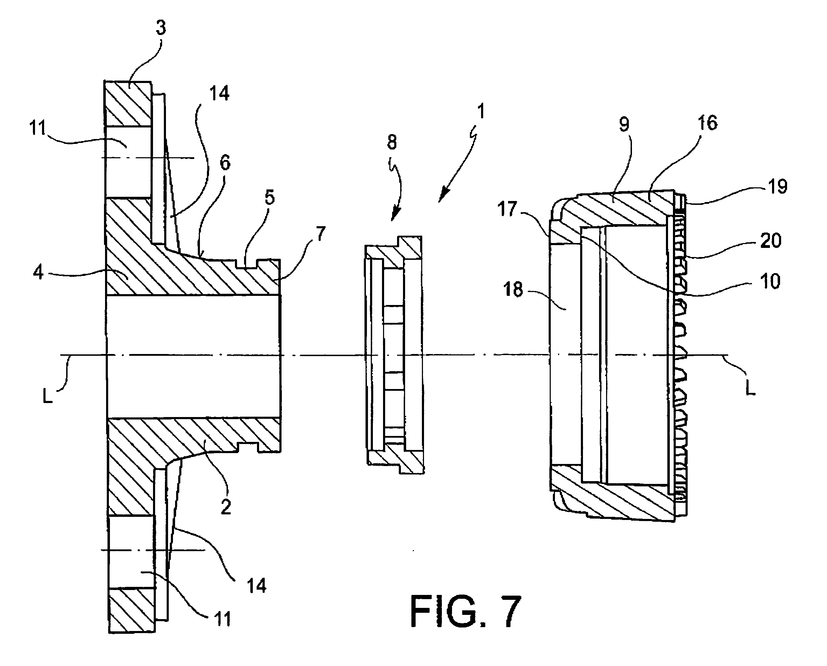

Fig. 7 is a sectional view along the line VII-VII in Fig. 6;

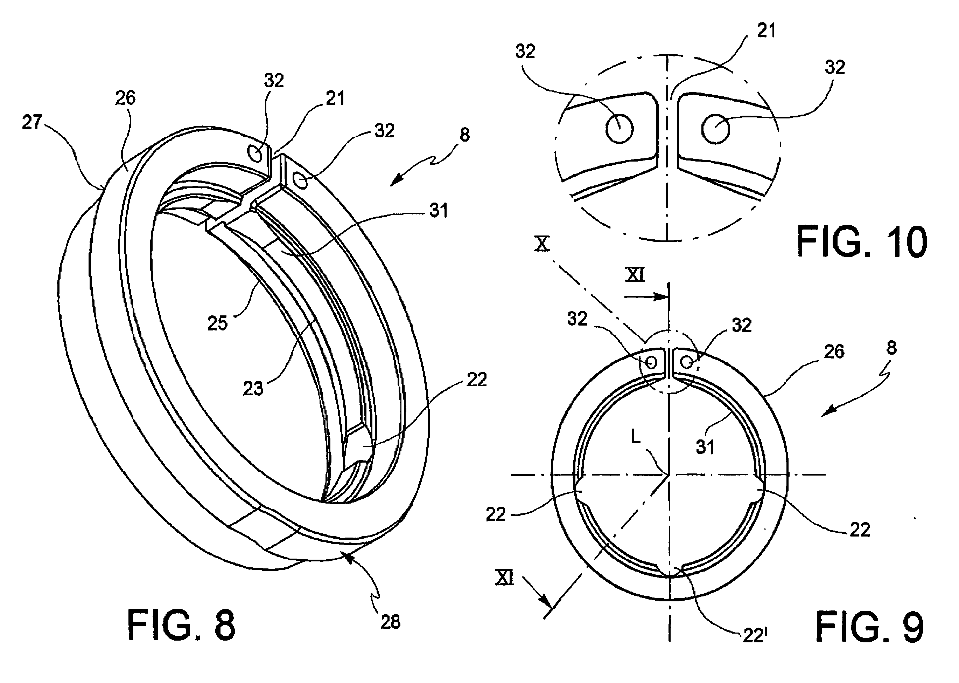

Fig. 8 is a perspective view of a withdrawal-prevention insert of the device according to an embodiment ;

Fig. 9 is a rear view of the insert in Fig. 8;

Fig. 10 is an enlarged view of the detail X in Fig. 9;

Fig. 11 is a sectional view along the line XI-XI in Fig. 9;

Fig. 12 is an enlarged view of the detail XII in Fig. 11;

Fig. 13 is an enlarged view of the detail XIII in Fig. 11;

Fig. 14 is a sectional view of a flanged tubular portion of the joining device according to an embodiment;

Fig. 15 is an enlarged view of the detail XV in Fig. 14;

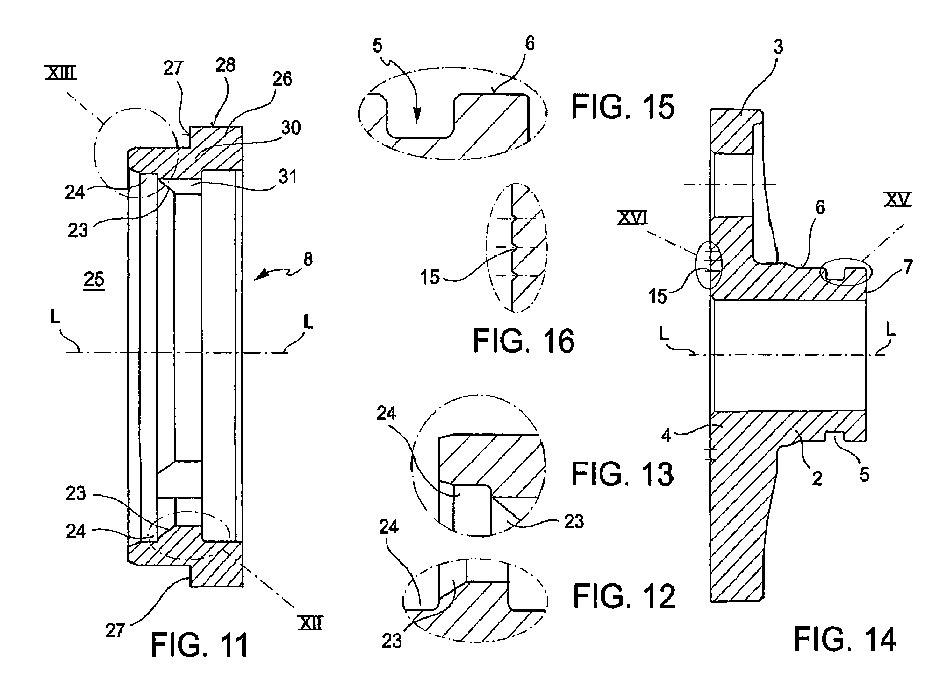

fag. 16 is an enlarged view of the detail XVI in Fig. 14;

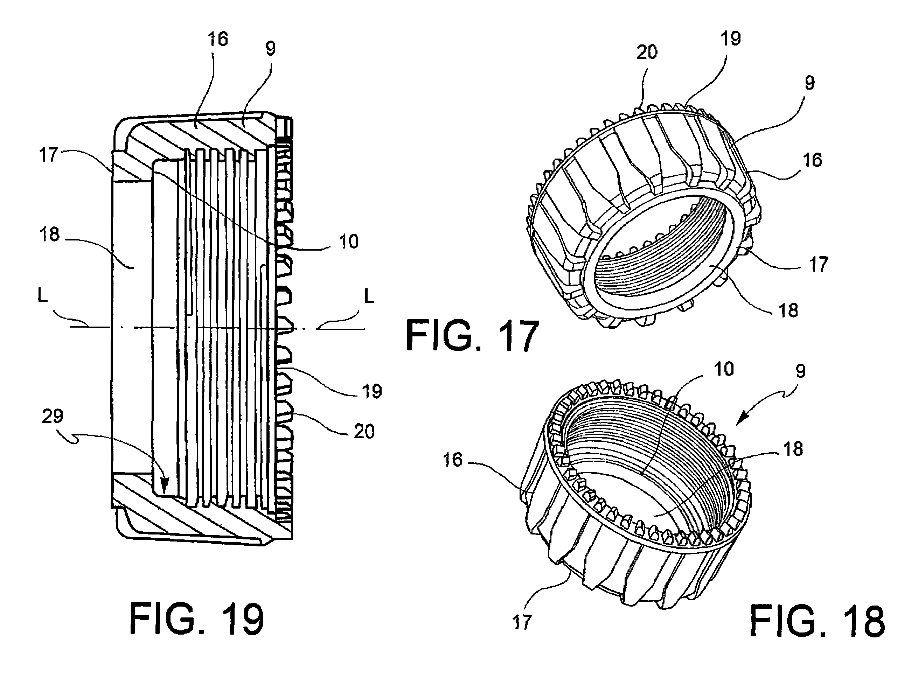

Figs. 17 and 18 are perspective views of a ring nut of the joining device according to an embodiment;

Fig. 19 is a sectional view of the ring nut in Fig. 18.

With reference to the Figures, a joining device for components in fluid conveyance and distribution systems, particularly a flanged joining device for valves and the like is generally indicated with the reference numeral 1.

The device 1 comprises a preferably cylindrical tubular portion 2 with circular annular cross-section; a connection flange 3 obtained as one piece with a first end 4 of the tubular portion 2; one or more seats 5 formed in an outer surface 6 of the tubular portion 2 in the proximity of a second end 7 thereof; at least one withdrawal-prevention insert 8 couplable with the seat 5 so as to form a shoulder which radially projects from such outer surface 6; as well as a threaded ring nut 9 having a countershoulder 10 which is configured so that, when the withdrawal-prevention insert 8 is disconnected from the seat 5, the ring nut can be inserted onto the tubular portion 2 and extracted therefrom and, one the withdrawal-prevention insert 8 has been coupled with the seat 5, the withdrwal-prevention insert 8 engages the ring nut 9 counter-shoulder 10, thus connecting the ring nut in a traction resisting manner to the tubular portion 2.

In this manner, it is possible to connect the device 1 to a valve in order to provide it with a flanged attachment by screwing the ring nut 9. Furthermore, the preset positioning of the seat 5 relative to the connection flange 3, and the seat 5 distance from the second end (free end) 7, ensure a preset standard measure for the valve, including the flanged attachment.

In accordance with an embodiment, the connection flange 3 is configured as an annular plate which is substantially circular and perpendicular to a longitudinal axis L-L of the tubular portion 2, and comprises a plurality of (preferably four) through holes 11 adapted to receive securing bolts (not shown) for the connection of the flange 3, by means of the interposition of an O-ring or other gasket, to a corresponding connection flange of a further fluid-technical device, e.g., a reservoir, a duct, a valve, etc.

The through holes 11 are advantageously arranged with a constant angular pitch around a circle which is concentric to the longitudinal axis L-L. In a rear surface 12 of the flange 3 facing the tubular portion 2 free end 7, bolt seats 13 can be formed embossed around the holes 11 in order to more easily receive the nut or head of the respective bolt without interfering with the room taken up by the ring nut 9.

Between two holes 11, respectively, the connection flange 3 has, in the rear surface 12 thereof, reinforcing ribs 14 joining to the tubular portion 2 so as to increase the mechanical strength of the connection between connection flange 3 and tubular portion 2.

In accordance with an embodiment, in a front surface 15 of the connection flange 3 opposite the rear surface 12 and intended to abut against a corresponding connection flange of another fluid-technical component, annular grooves 15 can be obtained which are adapted to increase the engage with a gasket, for example an O-ring.

The seat 5 can be obtained as a preferably but not necessarily annular circumferential groove essentially extending all around the tubular portion 2 outer surface 6.

Advantageously, the seat 5 has a rectangular shape in cross-section.

With particular advantage, tubular portion 2 along with the connection flange 3, or similar connecting portion, are obtained in large series as one piece by injection moulding and stored, while the seat 5 and, if needed, a cut to measure of the tubular portion 2 second end 7 are subsequently made by means of mechanical processing, so as to customize the device 1 for the several technical regulations in force and for the customers' needs.

The ring nut 9 has a preferably cylindrical, internally threaded side wall 16 with a front edge 17 defining a passage opening 18 and constituting the counter-shoulder 10.

According to an embodiment, the counter-shoulder 10 is configured as a radially inwardly projecting annular wall which extends without interruptions all around the passage opening 18.

Alternatively, the countershoulder 10 can comprise projections which are discontinuous or discrete.

In a rear edge 19 (free edge) of the ring nut side wall 16, anti-unscrewing little teeth 20 can be formed which are intended to engage corresponding recesses or little teeth formed in the component, for example, a valve, which the joining device 1 is intended to be connected to.

According to an embodiment, the withdrawal-prevention insert 8 has a preferably circular, open ring shape as a whole with a radial through slot 21 allowing the insert 8 to elastically expand during the insertion onto the tubular portion 2 free end 7 before snapping into the seat 5.

In order to promote the withdrawal-prevention insert 8 radial expansion during assembling, it has flexural means, preferably a plurality of notches 22 obtained in a radially inner surface of the insert 8. According to an embodiment, the notches 22 are mostly distributed in the insert 8 half opposite the slot 21. Advantageously, three notches 22 are provided, of which a first notch 22' is in the position radially opposite the slot 21, and the other two notches 22 are at an angle of about 70°-85° relative to the first notch 22'. The notches 22, 22' shape is preferably substantially semicircular.

In accordance with an embodiment, the withdrawal-prevention insert 8 further comprises expanding means which are suitable to open the insert 8 when it is axially pushed on the tubular portion 2 free end 7. Preferably, such expanding means comprise a ramp 23 extending from a prompt seat 24, which is obtained on a front side 25 of the insert 8, to the ridge of an inner locking projection 31 which extends (with or without interruptions) along an insert 8 inner circumference.

The inner locking projection 31 is intended to fit within the tubular portion 2 seat 5 in order to axially lock the withdrawal-prevention insert relative to the tubular portion 2.

In accordance with an embodiment, the inner locking projection 31 has a sectional trapezoidal shape with a sloped front side constituting the ramp 23, and a rear side which is perpendicular to the longitudinal axis L-L and is so configured as to abut against a corresponding seat 5 wall in order to implement a shape coupling which prevents the insert 8 axial withdrawal.

According to an embodiment, the notches 22, 22' are obtained in the inner locking projection 31 so as to divide it in a plurality of lengths arranged in a circumferential sequence.

A radially outer surface of the withdrawal-prevention insert 8 forms an outer locking projection 26, preferably a circumferential shoulder (except for the interruption at the slot 21) with a rest surface 27 essentially perpendicular to the longitudinal axis L-L, and facing the front side such as to engage the ring nut 9 countershoulder 10 to connect the latter to the tubular portion 2.

In order to prevent an accidental expansion of the anti-expansion insert 8 in use, it can comprise special anti-expansion means, particularly an abutting surface 28 which is radially outer and adapted to locate, once the device 1 has been mounted, against a corresponding ring nut 9 radially inner surface 29, which prevents it from expanding.

In accordance with a preferred embodiment, the withdrawal-prevention insert 8 is made in a single piece with a base portion 30 in the shape of a longitudinally cut tube, in which an inner surface of the base portion 30 forms the guide seat 24 and the inner locking projection 31 with ramp 23, and an outer surface of the base portion 30 forms the outer locking projection 26.

In this embodiment, the notches 22, 22' can be formed in the inner locking projection 31, thus dividing it into a plurality of discrete lengths, without decreasing the insert base portion 30 thickness.

As already stated before, the manufacturing of the joining device 1 according to the invention preferably takes place through the following steps:

- manufacturing the tubular portion with connection flange in a single piece by injection moulding;

- manufacturing the ring nut by injection moulding;

- manufacturing the withdrawal-prevention insert 8 by injection moulding;

- determining the seat 5 distance from connection flange 3 and tubular portion 2 second end 7, based on the device 1 future application and relative technical regulation;

- obtaining the seat 5 in the tubular portion 2 and, if needed, cutting to measure the tubular portion 2 second end 7, preferably by mechanical processing.

This allows combining the advantages of a large-scale production with the need to customize the product for different applications and technical regulations.

For the assembling of the device 1, the ring nut is inserted on the tubular portion 2 second end 7 (free end) and, subsequently, the withdrawal-prevention insert 8 is arranged with the guide seat 24 on the tubular portion 2 second end 7 and it is axially pushed. In this manner, the tubular portion end 7 slides on the ramp 23 and widens the insert 8, which elastically bends at the notches 22, 22'. When the insert inner locking projection 31 reaches the tubular portion 2 seat 5, the insert elastically shrinks, and the inner locking projection 31 is inserted in such seat 5, so that outer locking projection 26 along with the rest surface 27 constitute a shoulder integral with the tubular portion which prevents the ring nut 9 from slipping off.

Following these simple assembling operations, the device 1 can be easily connected, through the ring nut 9, to a valve or other fluid-technical component which is desired to be provided with a flanged attachment.

In order to make the withdrawal-prevention insert 8 disassembling from the seat 5 easier, two holes 32 can be provided which are drilled on a rear side of the insert (the only side which is exposed once the insert has been applied) in the proximity of the two free ends adjacent the through slot 21. The holes 32 allow the insertion of a tool for the insert 8 enlargement and successive disengagement.

According to an embodiment of the invention, the withdrawal-prevention insert 8 is made of a polyvinylidene fluoride (PVDF) material, while ring nut and tubular portion with flange or different connection are made of one of the following materials to choose from:

- polyvinyl chloride (PVC) ;

- polyvinyl chloride hydrochloride (CPVC) ;

- polypropylene;

- polyvinylidene fluoride (PVDF) .

Due to the fact that the PVDF mechanical strength is higher than the PVC, CPVC, and polypropylene mechanical strength, the withdrawal-prevention insert can be made only of one material (PVDF) for all four materials optionally selected for the other components of the joining device 1.

It shall be apparent that to the joining device according to the present invention, as well as to the manufacturing method to implement such device, one of ordinary skill in the art, with the aim of meeting specific, contingent needs, will be able to make further modifications and variations, all of which fall anyhow within the protections scope of the invention, as defined by the following claims.

## Claims

1. A joining device (1) for components in fluid conveyance and distribution systems,
comprising:
- a tubular portion (2);
- a connecting portion (3) obtained as one piece with a first end (4) of the tubular portion (2);
- one or more seats (5) formed in an outer surface (6) of the tubular portion (2) in the proximity of a second free end (7) thereof,
- at least one withdrawal-prevention insert (8) couplable with said seat (5) so as to form a shoulder which radially projects from said outer surface (6);
- a threaded ring nut (9) having a counter-shoulder (10) configured so that the withdrawal-prevention insert (8) can engage the ring nut (9) counter-shoulder (10), thus connecting the ring nut in a traction resisting manner to the tubular portion (2), **characterized in that**:
- the ring nut (9) can be inserted onto the tubular portion (2) and extracted wherefrom only when the withdrawal-prevention insert (8) has been disconnected from the seat (5) , and
- when the withdrawal-prevention insert (8) has been coupled with the seat (5) , the ring nut (9) cannot be inserted onto the tubular portion (2) and extracted therefrom.

2. The joining device (1) according to claim 1, wherein said connecting portion (3) comprises a connection flange (3) essentially perpendicular to a tubular portion (2) longitudinal axis (L-L) with a plurality of through holes (11) adapted to receive securing bolts.

3. The joining device (1) according to claim 2, wherein, in a flange (3) rear surface (12) facing the tubular portion (2) free end (7), bolt seats (13) are formed embossed around the holes (11), and between two adjacent holes (11), respectively, the connection flange (3) has reinforcing ribs (14) connecting to the tubular portion (2).

4. The joining device (1) according to any preceding claim, wherein the seat (5) comprises a circumferential groove essentially extending all around the tubular portion (2) outer surface (6).

5. The joining device (1) according to claim 4, wherein said seat (5) has a rectangular shape in cross-section.

6. The joining device (1) according to any preceding claim, wherein said ring nut (9) has an internally threaded side wall (16), with a front edge (17) defining a passage opening (18) and constituting said counter-shoulder (10).

7. The joining device (1) according to any preceding claim, wherein said withdrawal-prevention insert (8) has a generally open ring shape, and comprises flexural means which allow the radial widening thereof.

8. The joining device (1) according to the preceding claim, wherein the flexural means comprise a plurality of notches (22) obtained in the withdrawal-prevention insert (8) radially inner surface.

9. The joining device (1) according to the preceding claim, wherein said notches (22) are mainly distributed in the withdrawal-prevention insert (8) half opposite a through slot (21).

10. The joining device (1) according to any preceding claim, wherein said withdrawal-prevention insert (8) comprises expanding means adapted to open the withdrawal-prevention insert (8) when it is axially pushed on the tubular portion (2) free end (7).

11. The joining device (1) according to the preceding claim, wherein said expanding means comprise a ramp (23).

12. The joining device (1) according to any preceding claim, wherein the withdrawal-prevention insert (8) comprises an inner locking projection (31) which is intended to fit in the tubular portion (2) seat (5) in order to axially lock the withdrawal-prevention insert relative to the tubular portion (2).

13. The joining device (1) according to the preceding claim, wherein said inner locking projection (31) substantially extends along an inner circumference of the withdrawal-prevention insert (8), and has a trapezoidal shape in cross-section with a sloped front side constituting a widening ramp (23), and a rear side perpendicular to the longitudinal axis (L-L), and so configured as to abut against a corresponding seat (5) wall in order to obtain a shape coupling which prevents the withdrawal-prevention insert (8) axial extraction.

14. The joining device (1) according to claim 8 and 13, wherein said notches (22, 22') are obtained in said inner locking projection (31) so as to divide it into a plurality of discrete lengths.

15. The joining device (1) according to any preceding claim, wherein the withdrawal-prevention insert (8) comprises an outer locking projection (26) obtained on a radially outer side of the withdrawal-prevention insert (8), and having a rest surface (27) adapted to engage the ring nut (9) countershoulder (10) in order to connect ring nut (9) with tubular portion (2).

16. The joining device (1) according to any preceding claim, comprising anti-expansion means which prevent, in use, the withdrawal-prevention insert (8) widening and disengagement.

17. The joining device (1) according to claim 16, wherein said anti-expansion means comprise an abutting surface (28) that is obtained on the withdrawal-prevention insert (8) radially outer side and adapted to abut, once the device (1) has been assembled, against a corresponding ring nut (9) radially inner surface (29) which prevents a withdrawal-prevention insert (8) widening.

18. The joining device (1) according to any preceding claim, wherein said withdrawal-prevention insert (8) is made of a polyvinylidene fluoride (PVDF) material, and wherein ring nut and flanged tubular portion are made of a material which is selected from the group consisting of:
- Polyvinyl chloride (PVC);
- Polyvinyl chloride hydrochloride (CPVC);
- Polypropylene;
- Polyvinylidene fluoride (PVDF).

19. A method for manufacturing a device according to any preceding claim, comprising the steps of:
- manufacturing the tubular portion with connection flange in a single piece by injection moulding;
- manufacturing the ring nut by injection moulding;
- manufacturing the withdrawal-prevention insert by injection moulding;
- determining the position of the seat (5) relative to the connecting portion (3) and the tubular portion (2) second end (7), based on device (1) expected application and relative technical regulation;
- obtaining the seat (5) in the tubular portion (2) by mechanical processing.

20. The manufacturing method according to the preceding claim, comprising the step of cutting to measure the tubular portion (2) second end (7) by mechanical processing.

## Patentansprüche

1. Verbindungsvorrichtung (1) für Komponenten in Fluidförder- und Verteilungssystemen, enthaltend:
- einen röhrenförmigen Abschnitt (2);
- einen Verbindungsabschnitt (3), ausgebildet als ein Stück mit einem ersten Ende (4) des röhrenförmigen Abschnittes (2);
- einen oder mehrere Sitze (5), die in einer Außenoberfläche (6) des röhrenförmigen Abschnittes (2) in der Nähe eines zweiten freien Endes (7) desselben ausgebildet sind;
- wenigstens einen Abzieh-Verhinderungseinsatz (8), der mit dem Sitz (5) derart koppelbar ist, dass er eine Schulter ausbildet, die von der Außenoberfläche (6) radial hervorragt;
- eine Gewinderingmutter (9), die eine Gegenschulter (10) hat, die derart beschaffen ist, dass der Abzieh-Verhinderungseinsatz (8) mit der Gegenschulter (10) der Ringmutter (9) in Eingriff gelangen kann, wodurch die Ringmutter zugfest mit dem röhrenförmigen Abschnitt (2) verbunden ist, **dadurch gekennzeichnet, dass**:
- die Ringmutter (9) auf den ringförmigen Abschnitt (2) gesteckt und von diesem lediglich dann abgezogen werden kann, wenn der Abzieh-Verhinderungseinsatz von dem Sitz (5) getrennt wurde, und,
- wenn der Abzieh-Verhinderungseinsatz (8) mit dem Sitz (5) gekoppelt wurde, die Ringmutter (9) nicht auf den röhrenförmigen Abschnitt (2) gesteckt und von diesem abgezogen werden kann.

2. Verbindungsvorrichtung (1) nach Anspruch 1, bei der der Verbindungsabschnitt (3) einen Verbindungsflansch (3) enthält, der im wesentlichen senkrecht zu einer Längsachse des röhrenförmigen Abschnittes (2) verläuft und eine Vielzahl von Durchgangslöchern (11) aufweist, die dazu eingerichtet sind, Sicherungsbolzen aufzunehmen.

3. Verbindungsvorrichtung (1) nach Anspruch 2, bei der in einer Rückseite (12) des Flansches (3), die dem freien Ende (7) des röhrenförmigen Abschnittes (2) zugewandt ist, Bolzensitze (13) ausgebildet sind, die die Löcher (11) umgebend eingestanzt sind, und zwischen jeweils zwei benachbarten Löchern (11) der Verbindungsflansch (3) Verstärkungsrippen (14) aufweist, die mit dem röhrenförmigen Abschnitt (2) verbunden sind.

4. Verbindungsvorrichtung (1) nach einem der vorhergehenden Ansprüche, bei der der Sitz (5) eine Umfangsnut enthält, die sich im wesentlichen um die gesamte Außenfläche (6) des röhrenförmigen Abschnittes (2) erstreckt.

5. Verbindungsvorrichtung (1) nach Anspruch 4, bei der der Sitz (5) eine rechteckige Querschnittsform hat.

6. Verbindungsvorrichtung (1) nach einem der vorhergehenden Ansprüche, bei der die Ringmutter (9) eine Innengewinde-Seitenwand (16) hat, mit einer Vorderkante (17), die eine Durchgangsöffnung (18) begrenzt und die Gegenschulter (10) bildet.

7. Verbindungsvorrichtung (1) nach einem der vorhergehenden Ansprüche, bei der der Abzieh-Verhinderungseinsatz (8) im wesentlichen die Form eines offenen Rings hat und biegefähige Einrichtungen enthält, die eine radiale Weitung desselben gestatten.

8. Verbindungsvorrichtung (1) gemäß dem vorhergehenden Anspruch, bei der die biegeförmigen Einrichtungen eine Vielzahl von Kerben (22) enthält, die in der radialen Innenfläche des Abzieh-Verhinderungseinsatzes (8) ausgebildet sind.

9. Verbindungsvorrichtung (1) gemäß dem vorhergehenden Anspruch, bei der die Kerben (22) hauptsächlich in dem Abzieh-Verhinderungseinsatz (8) halb gegenüberliegend einem Durchgangsschlitz (21) ausgebildet sind.

10. Verbindungsvorrichtung (1) nach einem der vorhergehenden Ansprüche, bei der der Abzieh-Verhinderungseinsatz (8) Weitungseinrichtungen enthält, die dazu eingerichtet sind, den Abzieh-Verhinderungseinsatz (8) zu öffnen, wenn er auf das freie Ende (7) des röhrenförmigen Abschnittes geschoben (2) wird.

11. Verbindungsvorrichtung (1) gemäß dem vorhergehenden Anspruch, bei der die Weitungseinrichtungen eine Auflauffläche (23) enthalten.

12. Verbindungsvorrichtung (1) nach einem der vorhergehenden Ansprüche, bei der der Abzieh-Verhinderungseinsatz (8) einen inneren Verriegelungsvorsprung (31) enthält, der dazu bestimmt ist, in den Sitz (5) des röhrenförmigen Abschnittes (2) zu passen, um den Abzieh-Verhinderungseinsatz im Bezug auf den röhrenförmigen Abschnitt (2) axial zu verriegeln.

13. Verbindungsvorrichtung (1) gemäß dem vorhergehenden Anspruch, bei der sich der innere Verriegelungsvorsprung (31) im wesentlichen entlang eines Innenumfangs des Abzieh-Verhinderungseinsatzes (8) erstreckt und eine trapezförmige Querschnittsform mit einer abgeschrägten Vorderseite, die eine Weitungsauflauffläche (23) bildet, und einer Rückseite senkrecht zu der Längsachse (L-L) hat, und derart eingerichtet ist, dass er mit der Wand eines entsprechenden Sitzes (5) in Anlage gelangt, um einen Formschluss zu erzeugen, der ein axiales Herausziehen des Abzieh-Verhinderungseinsatzes (8) verhindert.

14. Verbindungsvorrichtung (1) nach Anspruch 8 und 13, bei der die Kerben (22, 22') in dem inneren Verriegelungsvorsprung (31) derart ausgebildet sind, dass sie diesen in eine Vielzahl diskreter Längen unterteilen.

15. Verbindungsvorrichtung (1) nach einem der vorhergehenden Ansprüche, bei der der Abzieh-Verhinderungseinsatz (8) einen äußeren Verriegelungsvorsprung (26) enthält, der auf einer radialen Außenseite des Abzieh-Verhinderungseinsatzes (8) ausgebildet ist und eine Auflagefläche (27) hat, die dazu eingerichtet ist, mit der Gegenschulter (10) der Ringmutter (9) in Eingriff zu gelangen, um die Ringmutter (9) mit dem röhrenförmigen Abschnitt (2) zu verbinden.

16. Verbindungsvorrichtung (1) nach einem der vorhergehenden Ansprüche, enthaltend Anti-Weitungseinrichtungen, die in Verwendung ein Weiten und Lösen des Abzieh-Verhinderungseinsatzes (8) verhindern.

17. Verbindungsvorrichtung (1) nach Anspruch 16, bei der die Anti-Weitungseinrichtungen eine Anlagefläche (28) enthalten, die auf der radialen Außenseite des Abzieh-Verhinderungseinsatzes (8) ausgebildet und dazu eingerichtet ist, sobald die Vorrichtung (1) zusammengesetzt ist, mit einer entsprechenden radialen Innenfläche der Ringmutter (9) in Anlage zu gelangen, wodurch eine Weitung des Abzieh-Verhinderungseinsatzes (8) verhindert wird.

18. Verbindungsvorrichtung (1) nach einem der vorhergehenden Ansprüche, bei der der Abzieh-Verhinderungseinsatz (8) aus einem Polyvinylidenfluorid-Material (PVDF-Material) besteht und bei der die Ringmutter und der röhrenförmige Flanschabschnitt aus einem Material bestehen, das aus der Gruppe gewählt ist, die besteht aus:
- Polyvinylchlorid (PVC);
- Polyvinylchlorid-Hydrochlorid (CPVC);
- Polypropylen;
- Polyvinylidenfluorid (PVDF).

19. Verfahren zum Herstellen einer Vorrichtung nach einem der vorhergehenden Ansprüche, umfassend folgende Schritte:
- Herstellen des röhrenförmigen Abschnittes mit einem Verbindungsflansch aus einem Stück durch Spritzgießen;
- Herstellen des Abzieh-Verhinderungseinsatzes durch Spritzgießen;
- Herstellen des Abzieh-Verhinderungseinsatzes durch Spritzgießen;
- Bestimmen der Position des Sitzes (5) im Bezug auf den Verbindungsabschnitt (3) und das zweite Ende (7) des röhrenförmigen Abschnittes (2) auf der Basis des erwarteten Einsatzes der Vorrichtung (1) und entsprechender technischer Vorgaben; und
- Ausbilden des Sitzes (5) in dem röhrenförmigen Abschnitt (2) durch mechanische Verarbeitung.

20. Herstellungsverfahren gemäß dem vorhergehenden Anspruch, umfassend den Schritt des Schneidens durch mechanische Verarbeitung, um das zweite Ende (7) des röhrenförmigen Abschnittes (2) zu messen.

## Revendications

1. Dispositif d'assemblage (1) pour composants dans des systèmes de transport et de distribution de fluide, comprenant :
- une partie tubulaire (2);
- une partie de raccordement (3) obtenue d'un seul tenant avec une première extrémité (4) de la partie tubulaire (2) ;
- un ou plusieurs sièges (5) formés dans une surface externe (6) de la partie tubulaire (2) à proximité de sa deuxième extrémité libre (7),
- au moins un insert anti-retrait (8) pouvant être couplé avec ledit siège (5) afin de former un épaulement qui fait radialement saillie de ladite surface externe (6);
- un écrou annulaire fileté (9) ayant un contre-épaulement (10) configuré de sorte que l'insert anti-retrait (8) peut mettre en prise le contre-épaulement (10) de l'écrou annulaire (9), raccordant ainsi l'écrou annulaire, d'une manière résistante à la traction, à la partie tubulaire (2), **caractérisé en ce que** :
- l'écrou annulaire (9) peut être inséré sur la partie tubulaire (2) et extrait de cette dernière, uniquement lorsque l'insert anti-retrait (8) a été déconnecté du siège (5), et
- lorsque l'insert anti-retrait (8) a été couplé avec le siège (5), l'écrou annulaire (9) ne peut pas être inséré sur la partie tubulaire (2) et extrait de cette dernière.

2. Dispositif d'assemblage (1) selon la revendication 1, dans lequel ladite partie de raccordement (3) comprend un rebord de raccordement (3) essentiellement perpendiculaire à un axe longitudinal (L-L) d'une partie tubulaire (2) avec une pluralité de trous de passage (11) adaptés pour recevoir des boulons de fixation.

3. Dispositif d'assemblage (1) selon la revendication 2, dans lequel, dans une surface arrière (12) du rebord (3) faisant face à l'extrémité libre (7) de la partie tubulaire (2), on forme des sièges de boulon (13) estampés autour des trous (11), et entre deux trous (11) adjacents, respectivement, le rebord de raccordement (3) a des nervures de renforcement (14) se raccordant à la partie tubulaire (2).

4. Dispositif d'assemblage (1) selon l'une quelconque des revendications précédentes, dans lequel le siège (5) comprend une rainure circonférentielle s'étendant essentiellement tout autour de la surface externe (6) de la partie tubulaire (2).

5. Dispositif d'assemblage (1) selon la revendication 4, dans lequel ledit siège (5) a une forme rectangulaire en coupe.

6. Dispositif d'assemblage (1) selon l'une quelconque des revendications précédentes, dans lequel ledit écrou annulaire (9) a une paroi latérale intérieurement filetée (16) avec un bord avant (17) définissant une ouverture de passage (18) et constituant ledit contre-épaulement (10).

7. Dispositif d'assemblage (1) selon l'une quelconque des revendications précédentes, dans lequel ledit insert anti-retrait (8) a une forme annulaire généralement ouverte, et comprend des moyens de flexion qui permettent son élargissement radial.

8. Dispositif d'assemblage (1) selon la revendication précédente, dans lequel les moyens de flexion comprennent une pluralité d'encoches (22) obtenues dans la surface radialement interne de l'insert anti-retrait (8).

9. Dispositif d'assemblage (1) selon la revendication précédente, dans lequel lesdites encoches (22) sont principalement réparties dans la moitié de l'insert anti-retrait (8) opposée à la fente de passage (21).

10. Dispositif d'assemblage (1) selon l'une quelconque des revendications précédentes, dans lequel ledit insert anti-retrait (8) comprend des moyens d'expansion adaptés pour ouvrir l'insert anti-retrait (8) lorsqu'il est axialement poussé sur l'extrémité libre (7) de la partie tubulaire (2).

11. Dispositif d'assemblage (1) selon la revendication précédente, dans lequel lesdits moyens d'expansion comprennent une rampe (23).

12. Dispositif d'assemblage (1) selon l'une quelconque des revendications précédentes, dans lequel ledit insert anti-retrait (8) comprend une saillie de blocage interne (31) qui est prévue pour s'adapter dans le siège (5) de la partie tubulaire (2) afin de bloquer axialement l'insert anti-retrait par rapport à la partie tubulaire (2).

13. Dispositif d'assemblage (1) selon la revendication précédente, dans lequel ladite saillie de blocage interne (31) s'étend sensiblement le long d'une circonférence interne de l'insert anti-retrait (8), et a une forme trapézoïdale en coupe avec un côté avant incliné constituant une rampe d'élargissement (23), et un côté perpendiculaire à l'axe longitudinal (L-L), et configuré ainsi afin de venir en butée contre une paroi du siège (5) correspondant afin d'obtenir un couplage de forme qui empêche l'extraction axiale de l'insert anti-retrait (8).

14. Dispositif d'assemblage (1) selon les revendications 8 et 13, dans lequel lesdites encoches (22, 22') sont obtenues dans ladite saillie de blocage interne (31) pour la diviser en une pluralité de longueurs distinctes.

15. Dispositif d'assemblage (1) selon l'une quelconque des revendications précédentes, dans lequel l'insert anti-retrait (8) comprend une saillie de blocage externe (26) obtenue sur un côté radialement externe de l'insert anti-retrait (8) et ayant une surface de repos (27) adaptée pour mettre en prise le contre-épaulement (10) de l'écrou annulaire afin de raccorder l'écrou annulaire (9) avec la partie tubulaire (2).

16. Dispositif d'assemblage (1) selon l'une quelconque des revendications précédentes, comprenant des moyens anti-expansion qui empêchent, à l'usage, l'élargissement et le dégagement de l'insert anti-retrait (8).

17. Dispositif d'assemblage (1) selon la revendication 16, dans lequel lesdits moyens anti-expansion comprennent une surface de butée (28) qui est obtenue du côté radialement externe de l'insert anti-retrait (8) et adaptée pour venir en butée, une fois que le dispositif (1) a été assemblé, contre une surface radialement interne (29) de l'écrou annulaire (9) correspondant qui empêche l'élargissement de l'insert anti-retrait (8).

18. Dispositif d'assemblage (1) selon l'une quelconque des revendications précédentes, dans lequel ledit insert anti-retrait (8) est réalisé à partir de polyvinylidène fluoré (PVDF) et dans lequel l'écrou annulaire et la partie tubulaire à rebord sont réalisés avec un matériau qui est choisi dans le groupe comprenant :
- le polychlorure de vinyle (PVC) ;
- le polychlorure de vinyle surchloré (CPVC) ;
- le polypropylène ;
- le polyfluorure de vinylidène (PVDF).

19. Procédé pour fabriquer un dispositif selon l'une quelconque des revendications précédentes, comprenant les étapes consistant à :
- fabriquer la partie tubulaire avec un rebord de raccordement d'un seul tenant par moulage par injection ;
- fabriquer l'écrou annulaire par moulage par injection ;
- fabriquer l'insert anti-retrait par moulage par injection ;
- déterminer la position du siège (5) par rapport à la partie de raccordement (3) et la deuxième extrémité (7) de la partie tubulaire (2), en fonction de l'application prévue du dispositif (1) et de la règlementation technique relative ;
- obtenir le siège (5) dans la partie tubulaire (2) par traitement mécanique.

20. Procédé de fabrication selon la revendication précédente, comprenant l'étape consistant à découper à la mesure la deuxième extrémité (7) de la partie tubulaire (2) par traitement mécanique.
